# EUROPÄISCHE PATENTSCHRIFT

(11) **EP 2 057 495 B1**
(45) Veröffentlichungstag und Bekanntmachung des Hinweises auf die Patenterteilung: **21.02.2018**
(21) Anmeldenummer: 08707390.4
(22) Anmeldetag: 30.01.2008
(51) Int. Cl.: G02B 6/44, H02G 15/013, H02G 15/076

(54) **KABELMUFFE**
CABLE JOINT
MANCHON DE CÂBLES

(30) Priorität: 14.02.2007 DE 202007002375 U
(43) Veröffentlichungstag der Anmeldung: 13.05.2009
(73) Patentinhaber: CCS Technology, Inc., Wilmington, DE 19803 (US)
(72) Erfinder: SYPLACZ, Roman, 58099 Hagen (DE); OSOBA, Markus, 58300 Wetter (DE); MÜLLER, Thorsten, 58708 Menden (DE); EICHSTÄDT, Andreas, 58675 Hemer (DE)
(74) Vertreter: Sturm, Christoph
(86) Internationale Anmeldenummer: PCT/EP2008/000689
(87) Internationale Veröffentlichungsnummer: WO 2008/098677

(56) Entgegenhaltungen:
- EP-A- 0 657 756
- WO-A-93/26069
- WO-A-99/33154
- DE-A1- 10 332 897
- DE-U1-202006 006 019
- JP-A- 8 237 848
- US-A1- 2004 156 611
- US-B1- 6 300 562

## Beschreibung

Die Erfindung betrifft eine Kabelmuffe zur strukturierten Ablage bzw. Handhabung von in Lichtwellenleiterkabeln geführten Lichtwellenleitern gemäß dem Oberbegriff des Anspruchs 1.

Kabelmuffen zur strukturierten Ablage bzw. Handhabung von in Lichtwellenleiterkabeln geführten Lichtwellenleitern werden in Lichtwellenleiterkabelnetzen zum Schutz von Spleißverbindungen an Verbindungsstellen von zwei Lichtwellenleiterkabeln sowie zum Schutz der Lichtwellenleiter an Abzweigstellen oder an Aufteilungsstellen von Lichtwellenleiterkabeln verwendet. Dabei müssen die Kabelmuffen die Kontinuität der Lichtwellenleiterkabel so gewährleisten, als wären die Lichtwellenleiterkabel nicht unterbrochen. Der strukturierten Ablage und schonenden Handhabung der Lichtwellenleiter kommt hierbei eine wichtige Rolle zu, damit die Übertragungseigenschaften der Lichtwellenleiter nicht negativ beeinträchtigt werden.

Eine Kabelmuffe mit den Merkmalen des Oberbegriffs des Anspruchs 1 ist aus der EP 0 646 294 B1 bekannt. So umfasst die dort offenbarte Kabelmuffe einen Abdeckkörper sowie einen in eine Öffnung des Abdeckkörpers einführbaren Dichtungskörper. Der Dichtungskörper umfasst ein zwischen zwei formstabilen Platten angeordnetes, gelartiges Dichtungsmaterial. Nach der EP 0 646 294 B1 ist der Dichtungskörper in einem Hohlraum in Axialrichtung nach innen und außen in Bezug auf den Abdeckkörper verschiebbar, um Druckunterschiede zwischen einem Innendruck und Außendruck der Kabelmuffe auszugleichen. Abhängig von diesem Druckunterschied kommt der Dichtungskörper dabei an unterschiedlichen Anschlägen zur Anlage.

Aus der DE 20 2006 006 019.7 ist ein Dichtungskörper für eine Kabelmuffe bekannt, der ein mittleres, zylinderartiges Dichtungskörpersegment sowie mehrere zylindersegmentartige Dichtungskörpersegmente umfasst, wobei die zylindersegmentartigen Dichtungskörpersegmente in Ausnehmungen, die an einer Außenkontur des mittleren, zylinderartigen Dichtungskörpersegments ausgebildet sind, einsetzbar bzw. aus den Ausnehmungen entfernbar sind. In montiertem Zustand ist in jede Ausnehmung des mittleren, zylinderartigen Dichtungskörpersegments ein zylindersegmentartiges Dichtungskörpersegment eingesetzt, wobei dann die zylindersegmentartigen Dichtungskörpersegmente die Außenkontur des mittleren Dichtungskörpersegments unter Ausbildung einer zylinderartigen Außenkontur ergänzen. Die Außenkontur des Dichtungskörpers ist an eine Innenkontur einer Öffnung des Abdeckkörpers, in welche der Dichtungskörper einzuführen ist, angepasst.

Die US 6 300 562 B1 offenbart eine Kabelmuffe nach dem Oberbegriff des Anspruchs 1.

Bei aus dem Stand der Technik bekannten Kabelmuffen bereitet das Einführen des Dichtungskörpers in die Öffnung des Abdeckkörpers Schwierigkeiten, da aufgrund von Fertigungstoleranzen der Abdeckkörper einem Verzug unterliegt, so dass dessen Öffnung nicht kreisrund sondern vielmehr oval ist. Liegt ein derartiger Verzug des Abdeckkörpers im Bereich seiner Öffnung, in welche der Dichtungskörper einzusetzen ist, vor, so muss zum Einführen des Dichtungskörpers in die Öffnung des Abdeckkörpers der Abdeckkörper manuell verformt werden, wodurch das Einführen des Dichtungskörpers in den Abdeckkörper erschwert wird. Weiterhin ist aufgrund eines solchen Verzugs des Abdeckkörpers keine optimale Dichtung zwischen dem Dichtungskörper und dem Abdeckkörper möglich, da nach dem Einführen des Dichtungskörpers in den Abdeckkörper die Innenkontur des Abdeckkörpers und die Außenkontur des Dichtungskörpers nicht optimal zueinander ausgerichtet sind.

Hiervon ausgehend liegt der vorliegenden Erfindung das Problem zu Grunde, eine neuartige Kabelmuffe zur strukturierten Ablage bzw. Handhabung von in Lichtwellenleiterkabeln geführten Lichtwellenleitern zu schaffen.

Dieses Problem wird dadurch gelöst, dass die eingangs genannte Kabelmuffe zur strukturierten Ablage bzw. Handhabung von in Lichtwellenleiterkabeln geführten Lichtwellenleitern durch die Merkmale des kennzeichnenden Teils des Anspruchs 1 weitergebildet ist. Erfindungsgemäß weist der Dichtungskörper an seiner Außenkontur mehrere Einführhilfselemente auf, die bei Einführen des Dichtungskörpers in die Öffnung des Abdeckkörpers den Abdeckkörper gleichmäßig aufweiten.

Der Dichtungskörper der erfindungsgemäßen Kabelmuffe verfügt an seiner Außenkontur über mehrere gegenüber der Außenkontur vorstehende Einführhilfselemente. Die Einführhilfselemente weiten den Abdeckkörper im Bereich seiner Öffnung, in die der Dichtungskörper einzuführen ist, gleichmäßig auf, wodurch ein fertigungsbedingter Verzug des Abdeckkörpers ausgeglichen werden kann. Hierdurch wird das Einführen des Dichtungskörpers in den Abdeckkörper erleichtert. Weiterhin wird durch die Konturanpassung der Innenkontur des Abdeckkörpers ein optimierter Dichtbereich zwischen Abdeckkörper und Dichtungskörper geschaffen.

Vorzugsweise sind die Einführhilfselemente derart rampenartig konturiert, dass sich eine Radialerstreckung derselben von einem in Einführrichtung gesehen vorne liegenden Ende in Richtung auf ein in Einführrichtung gesehen hinten liegendes Ende vergrößert.

Nach einer vorteilhaften Weiterbildung der Erfindung ist die Innenkontur des Abdeckkörpers im Bereich der Öffnung durch einen Absatz in einen in Einführrichtung gesehen vorne liegenden Abschnitt und einen in Einführrichtung gesehen hinten liegenden Abschnitt unterteilt, wobei die Einführhilfselemente mit dem in Einführrichtung gesehen vorne liegenden Abschnitt zusammenwirken, wobei die Einführtiefe des Dichtungskörpers in die Öffnung des Abdeckkörpers durch mindestens einen Vorsprung des Dichtungskörpers beschränkt wird, und wobei der oder jeder Vorsprung an dem Absatz des Abdeckkörpers zur Anlage kommt.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, anhand der Zeichnung näher erläutert. In der Zeichnung zeigt:
- Fig. 1:: eine als Haubenmuffe ausgebildete, erfindungsgemäße Kabelmuffe zur strukturierten Ablage bzw. Handhabung von in Lichtwellenleiterkabeln geführten Lichtwellenleitern im Querschnitt,
- Fig. 2:: ein vergrößertes Detail der Haubenmuffe gemäß Fig. 1,
- Fig. 3:: das Detail der Fig. 2 in perspektivischer Ansicht,
- Fig. 4:: einen Dichtkörper der erfindungsgemäßen Kabelmuffe in perspektivischer Ansicht; und
- Fig. 5:: ein vergrößertes Detail des Dichtkörpers gemäß Fig. 4.

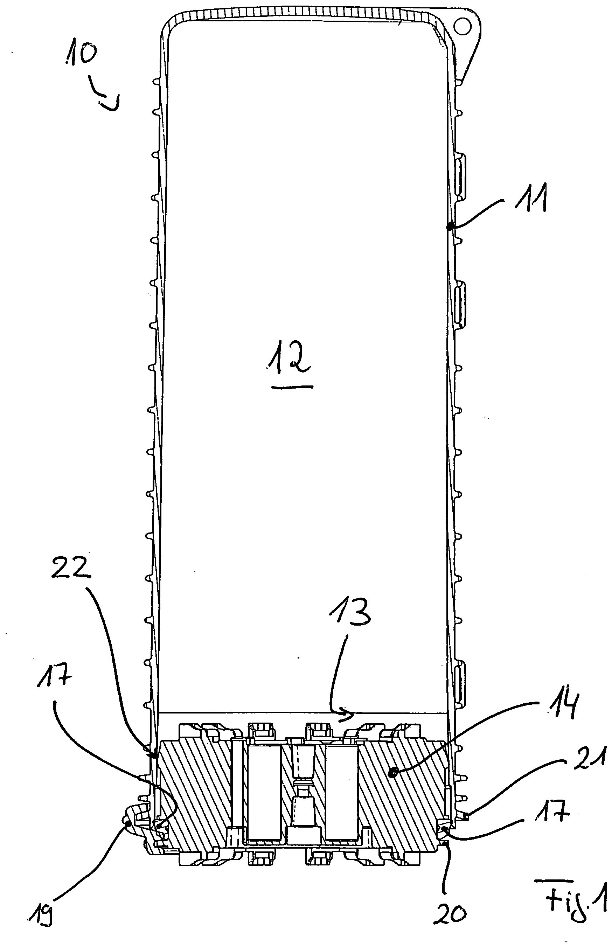

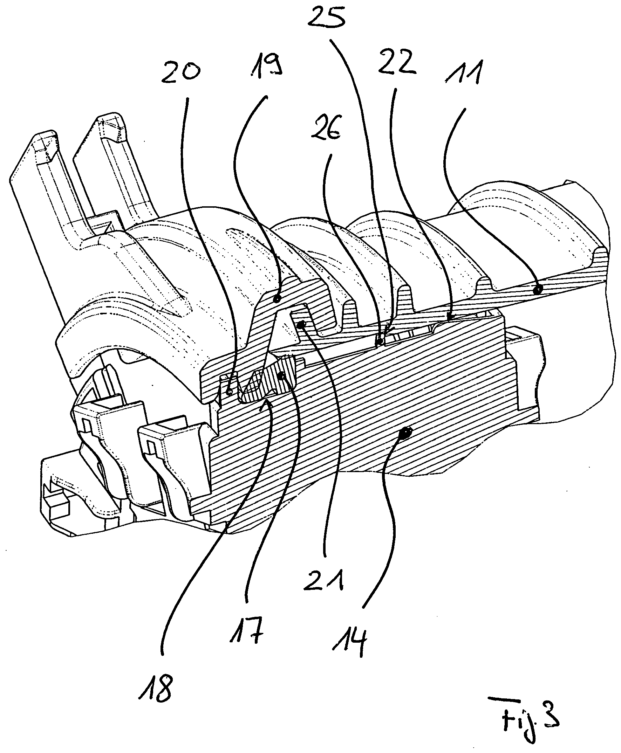

Unter Bezugnahme auf die Fig. 1 bis 5 wird nachfolgend die Erfindung anhand einer als Haubenmuffe ausgebildeten Kabelmuffe zur strukturierten Ablage bzw. Handhabung von in Lichtwellenleiterkabeln geführten Lichtwellenleitern im Detail beschrieben. Obwohl die Erfindung bei Haubenmuffen besonders vorteilhaft verwendet werden kann, ist die Erfindung auch bei anderen Muffentypen, zum Beispiel bei sogenannten Inline-Muffen, verwendbar.

Fig. 1 zeigt einen Querschnitt durch eine erfindungsgemäße Kabelmuffe 10, die als Haubenmuffe ausgebildet ist. Die Kabelmuffe 10 verfügt über einen als Abdeckhaube ausgebildeten Abdeckkörper 11, wobei der Abdeckkörper 11 einen Innenraum 12 der Kabelmuffe 10 begrenzt. Der Innenraum 12 der Kabelmuffe 10 dient insbesondere der Aufnahme von Spleißkassetten, um Lichtwellenleiter, die in Lichtwellenleiterkabeln geführt sind, handzuhaben. Neben dem Abdeckkörper 11 verfügt die Kabelmuffe 12 der Fig. 1 über einen in eine Öffnung 13 des Abdeckkörpers 11 eingeführten Dichtungskörper 14.

Der Dichtungskörper 14 definiert einen Einführungsbereich für Lichtwellenleiterkabel, um Lichtwellenleiterkabel von außen in den Innenraum 12 der Kabelmuffe 10 einzuführen und/oder um Lichtwellenleiterkabel aus dem Innenraum 12 heraus nach außen abzuführen.

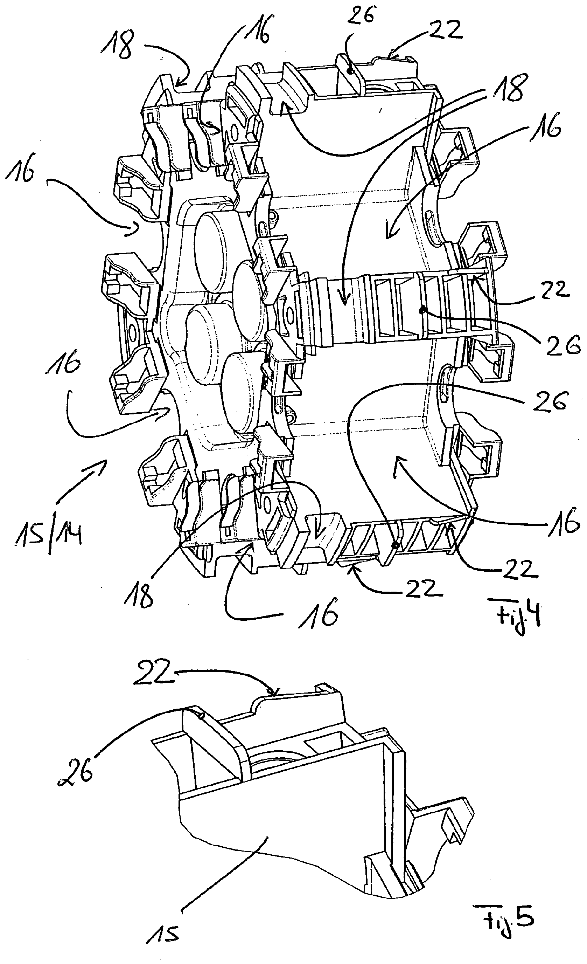

Fig. 4 zeigt ein mittleres Dichtungskörpersegment 15 des Dichtungskörpers 14 in perspektivischer Alleindarstellung. An einer Außenkontur bzw. einer äußeren Mantelfläche des mittleren Dichtungskörpersegments 15 sind mehrere Ausnehmungen 16 ausgebildet, in die in Übereinstimmung zum Dichtungskörper gemäß DE 20 2006 006 019 in Fig. 4 nicht-dargestellte zylindersegmentartige Dichtungskörpersegmente einführbar sind. Zwischen dem mittleren Dichtungskörpersegment 15 der Fig. 4 und jedem in eine Ausnehmung 16 des mittleren Dichtungskörpersegments einzusetzenden zylindersegmentartigen Dichtungskörpersegment wird eine Kabeleinführungsöffnung zur individuellen Abdichtung jeweils eines Kabels ausgebildet.

Der Dichtungskörper 14 verfügt über eine zylinderartige Außenkontur, die an eine Innenkontur des Abdeckkörpers 11 im Bereich der Öffnung 13 angepasst ist. Zwischen der Außenkontur des Dichtkörpers 14 und der Innenkontur des Abdeckkörpers 11 ist ein Dichtbereich ausgebildet, der mit Hilfe eines Dichtungsrings 17 abgedichtet wird. Der Dichtungsring 17 ist in eine an der Außenkontur des Dichtungskörpers 14 umlaufende Nut 18 des Dichtungskörpers 14 eingesetzt und liegt einerseits an der Außenkontur des Dichtungskörpers 14 und andererseits an der Innenkontur des Abdeckkörpers 11 an.

Zur Abdichtung des Dichtbereichs zwischen der Außenkontur des Dichtungskörpers 14 und der Innenkontur des Abdeckkörpers 11 wirkt der Dichtungsring 17 mit einem Klemmring 19 zusammen, der einerseits einen Vorsprung 20 des Dichtungskörpers 14 und andererseits einen Vorsprung 21 des Abdeckkörpers 11 umschließt.

Der Dichtungskörper 14 weist an seiner Außenkontur mehrere Einführhilfselemente 22 auf. Beim Einführen des Dichtungskörpers 14 in die Öffnung 13 des Abdeckkörpers weiten die Einführhilfselemente 22 den Abdeckkörper 11 im Bereich seiner Öffnung 13 gleichmäßig, nämlich kreisrund, auf, so dass ein eventueller fertigungsbedingter Verzug des Abdeckkörpers 11 ausgeglichen und der Dichtungskörper 14 ungehindert in die Öffnung 13 des Abdeckkörpers 11 eingeführt werden kann.

Über den Umfang der Außenkontur des Dichtungskörpers 14 sind verteilt mehrere derartige Einführhilfselemente 22 positioniert, wobei dieselben vorzugsweise über den Umfang des Dichtungskörpers 14 gleichverteilt positioniert sind. Wie Fig. 4 entnommen werden kann, weist das mittlere Dichtungskörpersegment 15 an seiner Außenkontur im Bereich zwischen jeweils zwei benachbarten Ausnehmungen 16 jeweils ein Einführhilfselement 22 auf.

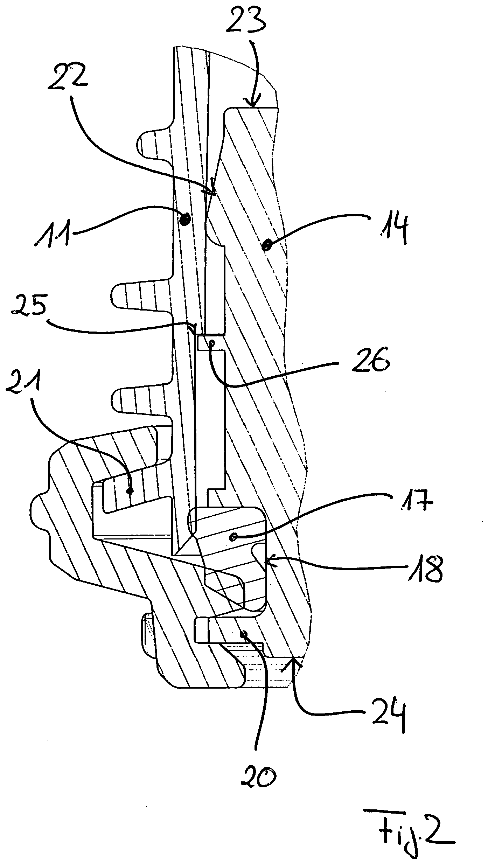

Wie am besten Fig. 2 entnommen werden kann, sind die Einführhilfselemente 22 derart rampenartig konturiert, dass sich eine Radialerstreckung derselben, um welche dieselben gegenüber der Außenkontur des Dichtungskörpers 14 vorstehen, von einem in Einführrichtung gesehen vorne liegenden Ende 23 des Dichtungskörpers 14 in Richtung auf ein in Einführrichtung gesehen hinten liegendes Ende 24 des Dichtungskörpers 14 vergrößert. Hierdurch wird beim Einführen des Dichtungskörpers 14 in die Öffnung 13 des Abdeckkörpers 11 derselbe stetig aufgeweitet.

Wie bereits erwähnt, weiten die Einführhilfselemente 22 den Abdeckkörper 11 im Bereich seiner Öffnung 13 kreisrund auf, so dass der Dichtungskörper 14 ungehindert in die Öffnung 13 des Abdeckkörpers 11 eingeführt werden kann. Die Einführhilfselemente 22 halten des weiteren den Abdeckkörper 11 nach dem Einführen des Dichtungskörper 14 in Form, so dass die Innenkontur des Abdeckkörpers 11 und die Außenkontur des Dichtungskörpers 14 optimal zueinander ausgerichtet sind und so ein gut abdichtbarer Dichtbereich zwischen Abdeckkörper 11 und Dichtungskörper 14 geschaffen wird.

Wie ebenfalls am besten Fig. 2 entnommen werden kann, ist die Innenkontur des Abdeckkörpers 11 im Bereich der Öffnung 13 durch einen Absatz 25 in einen in Einführrichtung gesehen vorne liegenden Abschnitt und in einen in Einführrichtung gesehen hinten liegenden Abschnitt unterteilt. Der in Einführrichtung gesehen vorne liegende Abschnitt der Innenkontur verfügt über einen kleineren Innendurchmesser als der in Einführrichtung gesehen hinten liegende Abschnitt derselben.

Die Einführhilfselemente 22 wirken mit dem in Einführrichtung gesehen vorne liegenden Abschnitt der Innenkontur des Abdeckkörpers 11 im Bereich seiner Öffnung 13 zusammen. Die Einführtiefe des Dichtungskörpers 14 in die Öffnung 13 des Abdeckkörpers wird durch mindestens einen Vorsprung 26 des Dichtungskörpers 14 beschränkt, wobei der oder jeder Vorsprung 26 an dem Absatz 25 der Innenkontur des Abdeckkörpers 11 zur Anlage kommt.

Wie wiederum Fig. 4 entnommen werden kann, verfügt das mittlere Dichtungskörpersegment 15 des Dichtungskörpers 14 über mehrere derartige Vorsprünge 26, wobei im Bereich zwischen jeweils zwei benachbarten Ausnehmungen 16 an der Außenkontur des mittleren Dichtungskörpersegments 15 ein derartiger Vorsprung 26 ausgebildet ist. Die Vorsprünge 26 sind dabei zwischen den Einführhilfselementen 22 und der Nut 18, die der Aufnahme des Dichtungsrings 17 dient, positioniert.

Bei Einführen des Dichtungskörpers 14 in den Abdeckkörper 11 der erfindungsgemäßen Kabelmuffe 10 wird demnach der Abdeckkörper 11 im Bereich seiner Öffnung 13 dann kreisrund aufgeweitet, wenn die Einführhilfselemente 22 an dem in Einführrichtung vorne liegenden Abschnitt der Innenkontur des Abdeckkörpers 11 entlang bewegt werden. Die Einführtiefe des Abdeckkörpers 11 wird dabei durch den Absatz 25 im Bereich der Innenkontur des Abdeckkörpers 11 begrenzt, an dem Vorsprünge 26 des Dichtungskörpers 14 zur Anlage kommen.

### Bezugszeichenliste

- 10: Kabelmuffe
- 11: Abdeckkörper
- 12: Innenraum
- 13: Öffnung
- 14: Dichtungskörper
- 15: mittleres Dichtungskörpersegment
- 16: Ausnehmung
- 17: Dichtungsring
- 18: Nut
- 19: Klemmring
- 20: Vorsprung
- 21: Vorsprung
- 22: Einführhilfselement
- 23: Ende
- 24: Ende
- 25: Absatz
- 26: Vorsprung

## Patentansprüche

1. Kabelmuffe zur strukturierten Ablage bzw. Handhabung von in Lichtwellenleiterkabeln geführten Lichtwellenleitern, insbesondere Haubenmuffe, mit einem einen Innenraum (12) definierenden Abdeckkörper (11), insbesondere einer Abdeckhaube, und mit mindestens einem in eine Öffnung (13) des Abdeckkörpers (11) einführbaren, der Einführung von Lichtwellenleiterkabeln in den Innenraum (12) und/oder der Ausführung von Lichtwellenleiterkabeln aus dem Innenraum (12) dienenden Dichtungskörper (14), wobei eine Außenkontur des Dichtungskörpers (14) an eine Innenkontur des Abdeckkörpers (11) im Bereich der Öffnung (13) angepasst ist, **dadurch gekennzeichnet, dass** die Kabelmuffe einen Klemmring (19) zur Abdichtung eines Dichtbereichs zwischen einer Außenkontur des Dichtungskörpers (14) und einer Innenkontur des Abdeckkörpers (11) aufweist, wobei der Klemmring (19) einerseits einen Vorsprung (20) des Dichtungskörpers (14) und andererseits einen Vorsprung (21) des Abdeckkörpers (11) umschließt, und dass der Dichtungskörper (14) an seiner Außenkontur mehrere Einführhilfselemente (22) aufweist, die bei Einführen des Dichtungskörpers (14) in die Öffnung (13) des Abdeckkörpers (11) den Abdeckkörper (11) gleichmäßig aufweiten.

2. Kabelmuffe nach Anspruch 1, **dadurch gekennzeichnet, dass** die Einführhilfselemente (22) bei Einführen des Dichtungskörpers (14) in die Öffnung (13) des Abdeckkörpers (11) den Abdeckkörper (11) im Bereich der Öffnung (13) kreisrund aufweiten.

3. Kabelmuffe nach Anspruch 1 oder 2, **dadurch gekennzeichnet, dass** der Dichtungskörper (14) eine zylinderartige Außenkontur aufweist, wobei über den Umfang der Außenkontur mehrere Einführhilfselemente (22) verteilt sind.

4. Kabelmuffe nach einem oder mehreren der Ansprüche 1 bis 3, **dadurch gekennzeichnet, dass** die Einführhilfselemente (22) derart rampenartig konturiert sind, dass sich eine Radialerstreckung derselben von einem in Einführrichtung gesehen vorne liegenden Ende (23) in Richtung auf ein in Einführrichtung gesehen hinten liegendes Ende (24) vergrößert.

5. Kabelmuffe nach einem oder mehreren der Ansprüche 1 bis 4, **dadurch gekennzeichnet, dass** die Innenkontur des Abdeckkörpers (11) im Bereich der Öffnung (13) durch einen Absatz (25) in einen in Einführrichtung gesehen vorne liegenden Abschnitt und einen in Einführrichtung gesehen hinten liegenden Abschnitt unterteilt ist, wobei die Einführhilfselemente (22) mit dem in Einführrichtung gesehen vorne liegenden Abschnitt, der einen kleineren Innendurchmesser als der in Einführrichtung gesehen hinten liegenden Abschnitt aufweist, zusammenwirken.

6. Kabelmuffe nach Anspruch 5, **dadurch gekennzeichnet, dass** die Einführtiefe des Dichtungskörpers (14) in die Öffnung (13) des Abdeckkörpers (11) durch mindestens einen Vorsprung (26) des Dichtungskörpers (14) beschränkt wird, wobei der oder jeder Vorsprung (26) an dem Absatz (25) des Abdeckkörpers (11) zur Anlage kommt.

7. Kabelmuffe nach einem oder mehreren der Ansprüche 1 bis 6, **dadurch gekennzeichnet, dass** der oder jeder Vorsprung (26) des Dichtungskörpers (14) zwischen dem oder jedem Einführhilfselement (22) und einer der Aufnahme eines Dichtungsrings (17) dienenden Nut (18) angeordnet ist.

## Claims

1. Cable sleeve for structured storage and handling of optical waveguides which are routed in optical waveguide cables, in particular shroud sleeve, having a covering body (11) which defines an interior space (12), in particular a covering shroud, and having at least one sealing body (14) which can be inserted into an opening (13) of the covering body (11) and serves for routing optical waveguide cables into the interior space (12) and/or for routing optical waveguide cables out of the interior space (12), wherein an outer contour of the sealing body (14) is matched to an inner contour of the covering body (11) in the region of the opening (13), **characterized in that** the cable sleeve has a clamping ring (19) for sealing off a sealing region between an outer contour of the sealing body (14) and an inner contour of the covering body (11), wherein the clamping ring (19) surrounds a projection (20) of the sealing body (14) and a projection (21) of the covering body (11), and **in that** the sealing body (14) has, on its outer contour, a plurality of insertion aid elements (22) which, when the sealing body (14) is inserted into the opening (13) of the covering body (11), uniformly widen the covering body (11).

2. Cable sleeve according to Claim 1, **characterized in that** the insertion aid elements (22), when the sealing body (14) is inserted into the opening (13) of the covering body (11), widen the covering body (11) in a circular manner in the region of the opening (13).

3. Cable sleeve according to Claim 1 or 2, **characterized in that** the sealing body (14) has a cylindrical outer contour, wherein a plurality of insertion aid elements (22) are distributed over the circumference of the outer contour.

4. Cable sleeve according to one or more of Claims 1 to 3, **characterized in that** the insertion aid elements (22) are contoured in the manner of a ramp in such a way that a radial extent of the said insertion aid elements increases in size from an end (23) which is situated at the front as seen in the insertion direction in the direction of an end (24) which is situated at the rear as seen in the insertion direction.

5. Cable sleeve according to one or more of Claims 1 to 4, **characterized in that** the inner contour of the covering body (11) is subdivided by a recess (25) into a section which is situated at the front as seen in the insertion direction and a section which is situated at the rear as seen in the insertion direction in the region of the opening (13), wherein the insertion aid elements (22) interact with the section which is situated at the front as seen in the insertion direction and has a smaller inside diameter than the section which is situated at the rear as seen in the insertion direction.

6. Cable sleeve according to Claim 5, **characterized in that** the insertion depth of the sealing body (14) into the opening (13) of the covering body (11) is limited by at least one projection (26) of the sealing body (14), wherein the or each projection (26) abuts against the recess (25) of the covering body (11).

7. Cable sleeve according to one or more of Claims 1 to 6, **characterized in that** the or each projection (26) of the sealing body (14) is arranged between the or each insertion aid element (22) and a groove (18) which serves to receive a sealing ring (17).

## Revendications

1. Manchon de câble destiné à recevoir de manière structurée ou permettant la manipulation de guides d'ondes optiques qui cheminent dans des câbles de guides d'ondes optiques, en particulier un manchon en calotte, comportant un corps de recouvrement (11) définissant une cavité (12), en particulier une calotte de recouvrement, et comportant au moins un corps d'étanchéité (14) qui peut être introduit dans une ouverture (13) du corps de recouvrement (11) et sert à l'introduction de câbles de guides d'ondes optiques dans la cavité (12) et/ou à l'extraction du câble de guides d'ondes optiques de la cavité (12), dans lequel un contour extérieur du corps d'étanchéité (14) est adapté à un contour intérieur du corps de recouvrement (11) dans la zone de l'ouverture (13), **caractérisé en ce que** le manchon de câble comporte une bague de serrage (19) destinée à rendre étanche une zone d'étanchéité entre un contour extérieur du corps de d'étanchéité (14) et un contour intérieur du corps de recouvrement (11), dans lequel la bague de serrage (19) entoure d'une part un élément en saillie (20) du corps d'étanchéité (14) et d'autre part, un élément en saillie (21) du corps de recouvrement (11), et **en ce que** le corps d'étanchéité (14) présente sur son contour extérieur une pluralité d'éléments d'aide à l'introduction (22) qui élargissent progressivement le corps de recouvrement (11) lors de l'introduction du corps d'étanchéité (14) dans l'ouverture (13) du corps de recouvrement (11).

2. Manchon de câble selon la revendication 1, **caractérisé en ce que** les éléments d'aide à l'introduction (22) élargissent de manière circulaire le corps de recouvrement (11) dans la zone de l'ouverture (13) lors de l'introduction du corps d'étanchéité (14) dans l'ouverture (13) du corps de recouvrement (11).

3. Manchon de câble selon la revendication 1 ou 2, **caractérisé en ce que** le corps d'étanchéité (14) présente un contour extérieur cylindrique, dans lequel une pluralité d'éléments d'aide à l'introduction (22) sont répartis le long de la circonférence du contour extérieur.

4. Manchon de câble selon une ou plusieurs des revendications 1 à 3, **caractérisé en ce que** les éléments d'aide à l'introduction (22) présentent un contour en rampe afin que leur extension radiale s'agrandisse depuis une extrémité (23) située vers l'avant lorsqu'on l'observe dans la direction d'introduction, vers une extrémité (24) située vers l'arrière lorsqu'on l'observe dans la direction d'introduction.

5. Manchon de câble selon une ou plusieurs des revendications 1 à 4, **caractérisé en ce que** le contour intérieur du corps de recouvrement (11), dans la zone de l'ouverture (13), est divisé par un épaulement (25) en une section située vers l'avant lorsqu'on l'observe dans la direction d'introduction et une section située vers l'arrière lorsqu'on l'observe dans la direction d'introduction, dans lequel les éléments d'aide à l'introduction (22) coopèrent avec la section située vers l'avant lorsqu'on l'observe dans la direction d'introduction, qui présente un diamètre inférieur à celui de la section située vers l'arrière lorsqu'on l'observe dans la direction d'introduction.

6. Manchon de câble selon la revendication 5, **caractérisé en ce que** la profondeur d'introduction du corps d'étanchéité (14) dans l'ouverture (13) du corps de recouvrement (11) est restreinte par au moins un élément en saillie (22) du corps d'étanchéité (14), dans lequel l'élément ou chaque élément en saillie (26) vient en appui sur l'épaulement (25) du corps de recouvrement (11).

7. Manchon de câble selon une ou plusieurs des revendications 1 à 6, **caractérisé en ce que** l'élément ou chaque élément en saillie (26) du corps d'étanchéité (14) est disposé entre l'élément ou chaque élément d'aide à l'introduction (22) et une rainure servant à recevoir une bague d'étanchéité (17).
